# EUROPÄISCHE PATENTSCHRIFT

(11) **EP 0 719 805 B1**
(45) Veröffentlichungstag und Bekanntmachung des Hinweises auf die Patenterteilung: **02.05.2001**
(21) Anmeldenummer: 95120266.2
(22) Anmeldetag: 21.12.1995
(51) Int. Cl.: C08F 265/04, C08F 271/02, G03G 9/13

(54) **Pfropf-Mischpolymerisate und diese enthaltende farblose, transparente elektrophotographische Toner**
Graft copolymers and colourless, transparent electrophotographic toners containing the same
Copolymères greffés et toners electrophotographiques, incolores et transparents les contenant

(30) Priorität: 29.12.1994 DE 4447106
(43) Veröffentlichungstag der Anmeldung: 03.07.1996
(73) Patentinhaber: AGFA-GEVAERT N.V., 2640 Mortsel (BE)
(72) Erfinder: Faust, Raimund Josef, Dr., D-65203 Wiesbaden (DE); Allen, Danuta Eva, D-65207 Wiesbaden (DE); Lutz, Silvia, D-55120 Mainz (DE)

(56) Entgegenhaltungen:
- US-A- 4 081 391
- US-A- 4 181 620
- US-A- 4 388 395

## Beschreibung

Die Erfindung betrifft Pfropf-Mischpolymerisate sowie negativ gesteuerte elektrophotographische Flüssigtoner, die diese Mischpolymerisate als Bindemittel enthalten.

Elektrophotographische Flüssigtoner sind üblicherweise in einer Flüssigkeit mit hohem elektrischem Widerstand dispergierte Partikel, deren Hauptbestandteile harzartige polymere Bindemittel, Ladungssteuerstoffe und Farbpigmente oder Farbstoffe sind. Die Farbstoffe oder bevorzugt Farbpigmente sind im allgemeinen erforderlich, da sie zum Sichtbarmachen von latenten Bildern, z. B. bei üblichen elektrophotographischen Kopien, dienen. Diese Farbstoffe oder Pigmente haben häufig zugleich die Funktion von Ladungssteuerstoffen und sind auch aus diesem Grund notwendige Bestandteile des Toners. Für bestimmte Anwendungen elektrophotographischer Bebilderungsverfahren, z. B. für die Herstellung von Druckplatten oder Resistmasken, sind keine Farbtoner erforderlich. Das Tonerbild dient hier lediglich zur Erzeugung von Druckfarbe annehmenden Bildelementen oder zur bildmäßigen Abdeckung einer Oberfläche als Schutz gegen Ätzlösungen oder Galvanisierbäder. Solche farblosen oder weißen Toner sind bereits bekannt.

In der JP-A Hei 1/142 688 werden weiße oder transparente Toner beschrieben, die ein polymeres Bindemittel, einen Ladungssteuerstoff, ein Trennmittel und ggf. ein weißes Pigment enthalten. Als Bindemittel werden z. B. Polystyrol, Styrol/Butadien-, Styrol/Acrylsäure-Copolymere, Polyethylen, Ethylencopolymere, Phenolharze, Epoxyharze, Allylphthalatpolymere, Polyamide, Polyester und Maleinatharze eingesetzt. Als positive Ladungssteuerstoffe werden basische Stickstoffatome enthaltende organische Verbindungen oder mit solchen Verbindungen oberflächenbehandelte Füllstoffe, als negative Ladungssteuerstoffe Carboxylgruppen enthaltende Verbindungen genannt. Die mit diesen Tonern erhaltenen Tonerbilder sind nicht ausreichend resistent gegen aggressive Chemikalien und nicht frei von Fehlstellen (pin-holes) und damit nur schlecht für die Verwendung als Resistmaterialien geeignet.

Farblose Toner werden auch in der JP-A 2/140 757 beschrieben. Sie werden dort als Zusätze zu Farbtonern eingesetzt. Sie enthalten höhere Anteile an Wachsen und sind deshalb zur Erzeugung von Tonerbildern für Flachdruckformen oder Resistmaterialien nicht geeignet.

In der EP-A 66 955 und der DE-A 22 48 191 werden farblose Toner beschrieben, die eine Verbindung enthalten, die zu einer farbigen Verbindung zu reagieren vermag. Auch diese Toner haben keine ausreichende Resistenz gegenüber aggressiven Substanzen wie Ätzmitteln.

Aufgabe der Erfindung war es, als Bindemittel für negativ aufladbare elektrophotographische Toner geeignete Polymere vorzuschlagen, die sich in Kombination mit geeigneten hochmolekularen Ladungssteuerstoffen in langkettigen aliphatischen Kohlenwasserstoffen zu einer stabilen Tonerdispersion verarbeiten lassen, aus der auf elektrophotographischem Wege farblose, transparente Tonerbilder abscheidbar sind, die zu einer fehlerfreien Schicht mit guter Resistenz gegen aggressive Chemikalien und gegen mechanischen Abrieb beim Flachdruck fixiert werden können und die beim Fixieren bzw. Einbrennen des Tonerbilds keine störende Verfärbung erleiden.

Erfindungsgemäß wird ein Pfropf-Mischpolymerisat aus wiederkehrenden Einheiten A, B, C und D 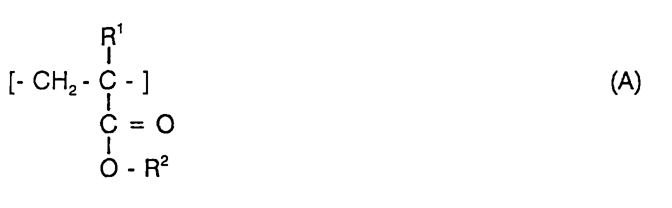 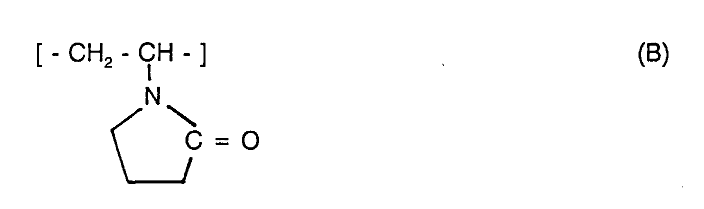 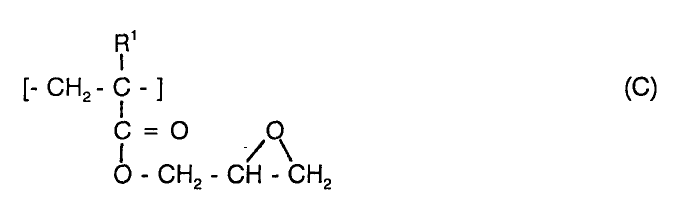 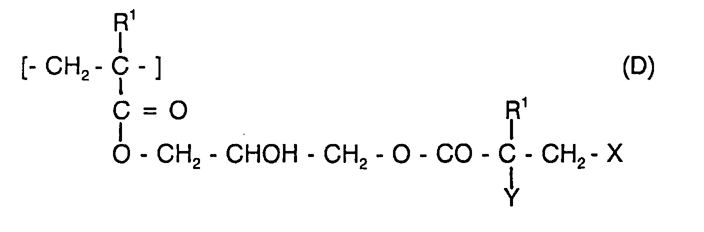 vorgeschlagen, worin X und Y Initiatorreste oder aufgepfropfte polymere Reste aus Einheiten B und E 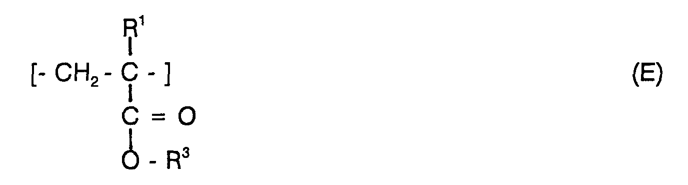 bedeuten und nicht mehr als einer der Reste X und Y ein Initiatorrest ist, wobei
- R¹: ein Wasserstoffatom oder eine Methylgruppe,
- R²: eine Alkylgruppe mit 6 bis 18 Kohlenstoffatomen,
- R³: eine Alkylgruppe mit 1 bis 3 Kohlenstoffatomen
und in mindestens einem Teil der Einheiten E R¹ ein Wasserstoffatom ist.

Erfindungsgemäß wird ferner ein farbloser und transparenter, negativ arbeitender Flüssigtoner vorgeschlagen, der aus einer stabilen Dispersion eines hochpolymeren Bindemittels und eines hochpolymeren Steuermittels in einem aliphatischen Kohlenwasserstoff besteht, wobei der Toner dadurch gekennzeichnet ist, daß das Bindemittel' ein Pfropf-Mischpolymerisat der vorstehend angegebenen Zusammensetzung und das Steuermittel ein Pfropf-Mischpolymerisat mit Einheiten H, I und K ist, worin
- H: der Formel 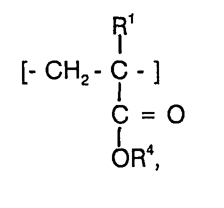
- I: der Formel 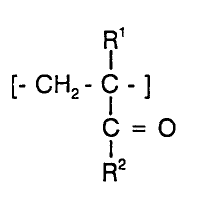
und
- K: der Formel 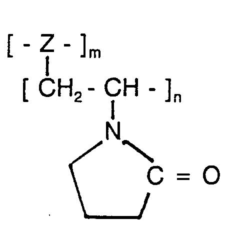
entspricht, worin
- R¹ und R²: die in Anspruch 1 angegebene Bedeutung haben,
- beide R¹: gleich oder verschieden sein können,
- R⁴: eine Alkylgruppe mit 1 bis 6 Kohlenstoffatomen und
- Z: ein durch Abstraktion eines Wasserstoffatoms aus einer Einheit H oder I entstandener Rest ist.

Erfindungsgemäß wird schließlich auch die Verwendung des vorstehend definierten Flüssigtoners zur Herstellung von Flachdruckplatten oder von Resistmaterialien, wie Ätz- oder Galvanoresists, vorgeschlagen.

Die erfindungsgemäßen Toner sind zum Unterschied von üblichen elektrophotographischen Tonern farblos und transparent, und sie enthalten auch keine für eine nachfolgende Verarbeitung als Farbbildner geeigneten und wirksamen Bestandteile. Sie dienen dazu, farblose Tonerbilder zu erzeugen, die als bildmäßige Abdeckungen oder Masken von zu verändernden Oberflächen, z. B. als Ätzreservagen, oder aber als farbführende Bildelemente einer Druckplatte, insbesondere einer Flachdruckplatte, geeignet sind. Bei den bekannten Farbtonern hat der Gehalt an Pigment oder Farbstoff nicht nur die Wirkung, dem Tonerbild eine gewünschte Färbung zu vermitteln; diese Bestandteile beeinflussen und fördern auch in wesentlichem Umfang die Aufladbarkeit der Tonerpartikel. Bei Weglassen der Farbpigmente werden deshalb die gewünschten elektrophotographischen Eigenschaften stark beeinträchtigt. Wie nun gefunden wurde, kann durch Einsatz der neuen Pfropf-Mischpolymerisate als Bindemittel, bevorzugt in Kombination mit den vorstehend genannten Pfropf-Mischpolymerisaten als Ladungssteuerstoffe, ein elektrophotographischer Flüssigtoner mit sehr guten elektrophotographischen Eigenschaften hergestellt werden, der zu Tonerbildern mit hervorragender Resistenz gegenüber Lösemitteln und Chemikalien, z. B. gegenüber Alkohole enthaltenden Feuchtwässern beim Flachdruck oder gegenüber Ätzmitteln, verarbeitet werden kann. Die erfindungsgemäßen Toner haben ferner die Eigenschaft, daß sie sich beim Fixieren durch Aufschmelzen nicht in störender Weise verfärben.

Die erfindungsgemäßen, als Bindemittel eingesetzten Pfropf-Mischpolymerisate bestehen aus einer Anzahl unterschiedlicher Einheiten. Ihre Grundkette enthält Einheiten A aus Alkyl(meth)acrylaten mit 6 bis 18 Kohlenstoffatomen in der Alkylgruppe. Diese Einheiten begünstigen die Ausbildung von stabilen Dispersionen. Die Grundkette enthält ferner Einheiten B, die von N-Vinyl-2-pyrrolidon abgeleitet sind und die negative Aufladbarkeit begünstigen. Sie enthält weiterhin Einheiten C von (Meth)acrylsäureestern mit funktionellen Gruppen, über die eine Verknüpfung mit den aufgepfropften Seitenketten erfolgt. Diese Einheiten sind vorzugsweise Glycidyl(meth)acrylateinheiten. Solche Einheiten sind in der Regel auch noch in dem fertigen Pfropfpolymeren enthalten, da sie bei der Umsetzung mit reaktiven Verbindungen, insbesondere (Meth)acrylsäure, an die sich später die aufgepfropften Seitenketten anlagern, nicht vollständig umgesetzt werden. Schließlich enthält die Grundkette noch solche Einheiten, die aus den Glycidylmethacrylateinheiten durch Umsetzen mit funktionellen Verbindungen, insbesondere ungesättigten Carbonsäuren, und deren weitere Polymerisation mit ungesättigten Verbindungen zu polymeren Seitenketten entstanden sind. Die Seitenketten enthalten wiederum Einheiten des Typs B und Einheiten E von kurzkettigen Alkyl(meth)acrylaten, wobei mindestens ein Teil der Alkyl(meth)acrylateinheiten aus Alkylacrylateinheiten besteht.

Die Mengenanteile der Einheiten A, B, C und D in der Grundkette liegen im allgemeinen im Bereich von 50 - 100, bevorzugt 60 - 80 Gewichtsteilen A, 0,5-3,0, vorzugsweise 1 - 2 Gewichtsteilen B, 0,5 - 4, vorzugsweise 1,5 - 3 Gewichtsteilen C und 250 - 1000, bevorzugt 350 - 600 Gewichtsteilen D.

Die erfindungsgemäßen Pfropf-Mischpolymerisat-Bindemittel werden mit Ladungssteuerstoffen bzw. -steuermitteln gemischt, die Pfropf-Mischpolymerisate aus Einheiten H, I und K sind. Die Mengenanteile der Einheiten H, I und K liegen bevorzugt im Bereich von 60 bis 98, insbesondere 70 bis 90 Gew.-% H, 0 bis 30, insbesondere 5 bis 20 Gew.-% I und 1 bis 20, insbesondere 2 bis 10 Gew.-% K.

Die Herstellung der als Bindemittel eingesetzten Pfropf-Mischpolymerisate erfolgt zweckmäßig in mehreren Stufen. Zunächst wird ein Polymeres durch Lösungs-bzw. Emulsionspolymerisation von Monomeren hergestellt, die die Einheiten A, B und C bilden. Die Polymerisation wird zweckmäßig unter radikalischer Initiierung und bevorzugt in einem Lösemittel durchgeführt, das als Dispergiermittel für die spätere Toneranwendung geeignet ist. Der Mengenanteil der Monomeren liegt dabei im Bereich von 50 - 100, vorzugsweise 60 - 80 Gewichtsteilen A, 0,5-3, vorzugsweise 1 - 2 Gewichtsteilen B und 1 - 6, vorzugsweise 2 - 4 Gewichtsteilen C. Dieses Terpolymere wird in einer zweiten Stufe mit Acryl- oder Methacrylsäure in Gegenwart eines tertiären Amins umgesetzt, wobei die Glycidylgruppe der Einheit C mit der Carboxylgruppe der (Meth)acrylsäure unter Esterbildung reagiert. Die Mengenanteile bei dieser Stufe werden so gewählt, daß die Carboxylgruppen vollständig umgesetzt und nur ein Teil der Epoxidgruppen verestert werden. Im allgemeinen werden etwa 0,1 bis 0,9 vorzugsweise 0,2 bis 0,75 Äquivalente Säure je Äquivalent Epoxidgruppen eingesetzt.

Schließlich werden in einer Pfropfpolymerisationsreaktion weitere Monomere der Typen B und E in Gegenwart des Polymeren mit seitenständigen (Meth)acryloyloxygruppen polymerisiert. Dabei entsteht ein Pfropf-Mischpolymerisat mit aufgepfropften Seitenketten aus diesen Einheiten. Das Mengenverhältnis der Einheiten B und E in der Seitenkette ist im allgemeinen so bemessen, daß auf eine Einheit aus (Meth)acrylsäure im Mittel etwa 1 - 20 Einheiten B und 250 - 500 Einheiten E kommen. In der Regel entstehen neben den aufgepfropften Ketten aus B und E stets in gewisser Menge auch unabhängige Mischpolymerisate aus B und E, die nicht an das Grundpolymere aus A, B , C und D gebunden sind. Ihre Gegenwart stört die Brauchbarkeit des Polymerisationsprodukts nicht, solange noch Pfropfpolymerisate in signifikantem Umfang gebildet werden. Dies ist gewährleistet, wenn die Herstellung in der beschriebenen Weise erfolgt, d. h. wenn bei der letzten Stufe der Polymerisation Polymere mit seitenständigen (Meth)acryloylgruppen als Ausgangsstellen für eine Polymerisation angeboten werden.

In analoger Weise werden die Pfropf-Mischpolymerisate hergestellt, die als Ladungssteuerstoffe dienen, wobei jedoch die Stufe der Addition von (Meth)acrylsäure an eine Epoxidgruppe entfällt. Hier entstehen in der zweiten Stufe Mischpolymerisate, in denen die Einheiten B und E die Grundkette fortsetzen, teils seitlich an Einheiten der Grundkette gepfropft werden und teils getrennte Mischpolymerisate bilden. Die Polymerisation erfolgt vorteilhaft in Lösung bzw. Emulsion in einem inerten Lösemittel, vorzugsweise einem aliphatischen oder aromatischen Kohlenwasserstoff. Sie wird im allgemeinen in gleicher Weise durchgeführt wie bei der Herstellung des Bindemittels.

Die fertigen Pfropf-Mischpolymerisat-Bindemittel werden zur Herstellung des erfindungsgemäßen Toners mit polymeren Ladungssteuerstoffen der oben angegebenen Zusammensetzung gemischt. Das Mischen erfolgt am zweckmäßigsten durch Vermischen der bei der Polymerisation in einem Kohlenwasserstoff als
Löse- oder Dispergiermittel erhaltenen stabilen Dispersionen im gewünschten Mengenverhältnis und ggf. durch Verdünnen mit weiterem Lösemittel.

In den Einheiten A ist R² ein Alkylrest mit 6 bis 18, bevorzugt 8 bis 15 Kohlenstoffatomen; R³ ist bevorzugt eine Methylgruppe.

Der erfindungsgemäße Flüssigtoner wird, wie oben erwähnt, durch Vermischen von Binde- und Steuermittel, vorteilhaft in Form der bei der Polymerisation anfallenden stabilen Dispersionen in Kohlenwasserstoffen hergestellt. Als Dispergiermittel werden bevorzugt aliphatische Kohlenwasserstoffe mit etwa 8 bis 15 Kohlenstoffatomen eingesetzt. Die Mengenanteile von Bindemittel und Steuerstoff liegen im allgemeinen im Bereich von
80 - 99, bevorzugt 85 - 96 Gew.-% Bindemittel und
1 - 20, bevorzugt 4 - 15 Gew.-% Steuermittel,
bezogen auf den Gesamtfeststoffgehalt. Die gebrauchsfertigen Toner weisen im allgemeinen einen Feststoffgehalt von etwa 0,5 - 10, vorzugsweise 0,8 - 5 Gew.-% auf.

Die erfindungsgemäßen Toner zeichnen sich dadurch aus, daß sie ohne Zusatz von Farbpigmenten oder Farbstoffen eine positive Aufladbarkeit in der erforderlichen Höhe aufweisen. Sie benötigen auch keine niedermolekularen Ladungssteuermittel und weisen daher nach dem Fixieren zum Tonerbild eine besonders gute Resistenz gegenüber Ätzmitteln und organischen Lösemitteln auf, die sie hervorragend zum Einsatz als Resistmasken und für Flachdruckplatten geeignet machen. Wegen ihrer auch nach dem Fixieren erhaltenen Farblosigkeit und Transparenz sind sie auch zur Herstellung farbiger Bilder durch bildmäßiges Abdecken einer farbigen Schicht und Entfernen der freiliegenden Schichtbereiche durch Auswaschen oder Ätzen geeignet. Diese Vorteile werden durch die Kombination der oben bezeichneten speziellen polymeren Bindemittel und Ladungssteuermittel erreicht.

Die folgenden Beispiele erläutern bevorzugte Ausführungsformen der Erfindung.

### Beispiel 1

### Synthese eines Pfropfpolymeren als Bindemittel

### Reaktionsstufe 1

In einem Dreihalskolben mit Rückflußkühler, Gaseinleitungsrohr und Rührer wurden 72 g 2-Ethylhexylmethacrylat, 1,2 g N-Vinyl-2-pyrrolidon, 2,7 g Glycidylmethacrylat, 1,0 g Azobisisobutyronitril und 125 g Isopar H (Gemisch von verzweigten C₁₀- bis C₁₂-Paraffinkohlenwasserstoffen, Siedebereich 179 - 192 °C; Flammpunkt 58 °C) vorgelegt und unter Reinststickstoff zur Polymerisation gebracht; hierzu wurde das Gemisch mit einem Heizbad auf 90 °C erwärmt und unter Rühren 6 Stunden bei 90 °C polymerisiert. Nach Abkühlen wurde belüftet, mit 100 ml Isopar H versetzt und sodann ein Teil (100 ml) des Lösemittels unter Vakuum bei 20 mbar abdestilliert, um Restmonomere abzutrennen. Die so erhaltene Polymerlösung war von farblosem, transparentem Aussehen und leicht viskos.

### Reaktionsstufe 2

In einem Dreihalskolben mit Rückflußkühler, Gaseinleitungsrohr und Rührer wurde das aus Reaktionsstufe 1 erhaltene Zwischenprodukt mit Methacrylsäure zur Reaktion gebracht. Hierzu wurden zunächst 200 g des Zwischenprodukts vorgelegt, auf 90 °C erwärmt, mit 0,16 g Dimethylaminododecan und nach 30 Minuten mit 0,42 g Methacrylsäure versetzt. Nach einer Gesamtreaktionszeit von 14 Stunden bei 90 °C wurde ein farbloses, transparentes Reaktionsprodukt erhalten.
Viskosität: 89 bis 105 mPa·s
Feststoff: 40 Gew.-%

### Reaktionsstufe 3

In einem Dreihalskolben mit Rückflußkühler, Gaseinleitungsrohr und Rührer wurden unter Reinststickstoff 29,0 g des Produkts aus Reaktionsstufe 2, 54 g Methylacrylat, 27 g Methylmethacrylat, 5,0 g N-Vinyl-2-pyrrolidon, 0,4 g tert.-Dodecylmercaptan und 0,9 g Azobisisobutyronitril vorgelegt und auf 90 °C Innentemperatur erwärmt. Es wurde bei 90 °C 7 Stunden polymerisiert; sodann wurden nochmals 0,8 g Azoisobutyronitril zugegeben und es wurde erneut 5 Stunden bei 90 °C polymerisiert. Nach Abkühlen wurde belüftet, mit 100 ml Isopar H versetzt und durch Abdestillieren im Vakuum ein Teil des Lösemittels (100 ml) entfernt, um Restmonomere abzutrennen. Es wurde ein milchig-weißes Reaktionsprodukt erhalten. (Lösung A)
Viskosität: 3,2 bis 3,6 mPa·s bei 30 Gew.-% Feststoff
Leitfähigkeit: 7 bis 10·10⁻¹² Siemens/cm

### Synthese eines polymeren Steuermittels

In einem Dreihalskolben mit Rückflußkühler, Tropftrichter mit Druckausgleichs-und Gaseinleitungsrohr und Rührer wurden unter Reinststickstoff

| | |
|---|---|
| 85 g | Laurylmethacrylat, |
| 15 g | Methylmethacrylat und |
| 0,5 g | Azobisisobutyronitril in |
| 300 g | Isopar H |

bei 80 °C polymerisiert. Nach 4 Stunden wurden nochmals 0,5 g Azoisobutyronitril zugesetzt und das Ganze weitere 4 Stunden bei 80 °C polymerisiert. Diese Copolymerlösung wurde nun mit 6,0 g N-Vinyl-2-pyrrolidon versetzt und erneut unter Reinststickstoff bei 100 °C polymerisiert. Nach 8 Stunden wurde ein Pfropfpolymeres des Polymertyps B erhalten. Diesem Polymeren wurden 100 ml Isopar H zugesetzt und 50 ml des Lösemittels wurden unter 20 mbar abdestilliert; auf diese Weise wurden Anteile von Restmonomeren abgetrennt. Danach wurde nach einer gravimetrischen Feststoffbestimmung soviel Isopar H zugesetzt, daß ein Feststoffgehalt an Pfropfpolymerem von 18,5 Gew.-% erhalten wurde. (Lösung B)

### Herstellung eines farblosen Flüssigtoners

### Herstellung des Flüssigkonzentrats

Das Tonerkonzentrat wurde durch Mischen von

| | |
|---|---|
| 66,9 g | Lösung A, |
| 7,03 g | Lösung B und |
| 235 g | Isopar G |

hergestellt. Hierzu wurden zunächst Lösung A und Lösung B bei 60 °C 1 Stunde gerührt, nach Abkühlen mit Isopar G versetzt und erneut 5 Minuten gerührt.

### Herstellung des Toners durch Verdünnung

1 Volumenteil Flüssigkonzentrat wurde mit 4 Volumenteilen Isopar G versetzt und 5 Minuten bei Raumtemperatur gerührt.

## Patentansprüche

1. Pfropf-Mischpolymerisat aus wiederkehrenden Einheiten A, B, C und D 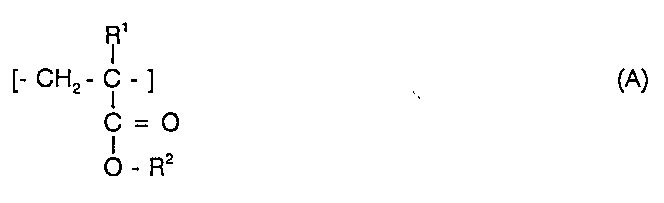 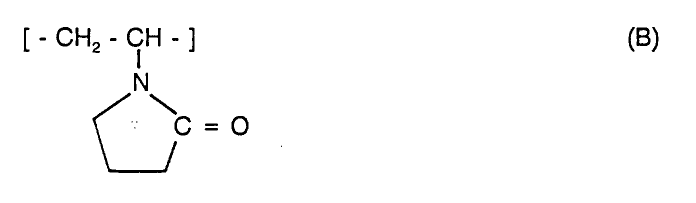 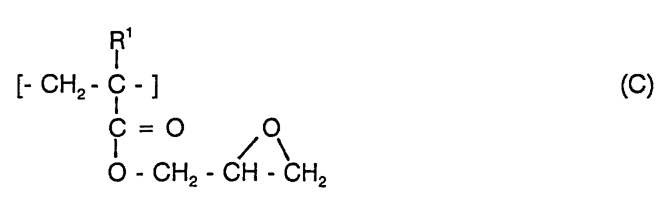 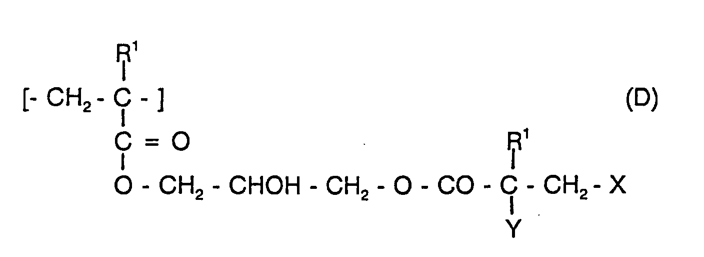 worin X und Y Initiatorreste oder aufgepfropfte polymere Reste aus Einheiten B und E 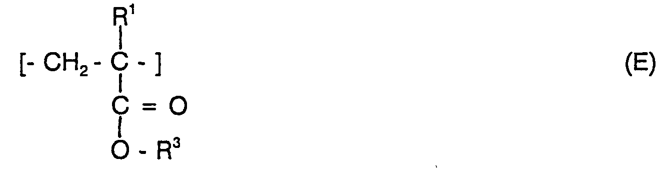 bedeuten und nicht mehr als einer der Reste X und Y ein Initiatorrest ist, wobei
R¹ ein Wasserstoffatom oder eine Methylgruppe,
R² eine Alkylgruppe mit 6 bis 18 Kohlenstoffatomen,
R³ eine Alkylgruppe mit 1 bis 3 Kohlenstoffatomen
und in mindestens einem Teil der Einheiten E R¹ ein Wasserstoffatom ist.

2. Pfropf-Mischpolymerisat nach Anspruch 1, dadurch gekennzeichnet, daß die Mengenanteile der Einheiten wie folgt bemessen sind:
| | | |
|---|---|---|
| A | 50 - 100 | Gewichtsteile |
| B (in der Hauptkette) | 0,5 - 3 | " |
| C | 0,5 - 4 | " |
| D | 250 - 1000 | " |

3. Farbloser und transparenter, negativ aufladbarer Flüssigtoner, bestehend aus einer stabilen Dispersion eines hochpolymeren Bindemittels und eines hochpolymeren Steuermittels in einem aliphatischen Kohlenwasserstoff, dadurch gekennzeichnet, daß das Bindemittel ein Pfropf-Mischpolymerisat gemäß einem der Ansprüche 1 und 2 und das Steuermittel ein Polymeres mit Einheiten H, I und K ist, worin
H der Formel 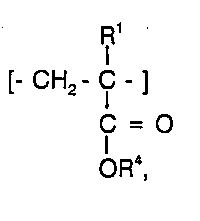
I der Formel 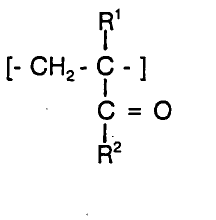
und
K der Formel 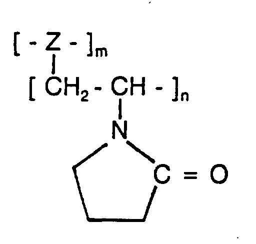
entspricht, worin
R¹ und R² die in Anspruch 1 angegebene Bedeutung haben,
beide R¹ gleich oder verschieden sein können,
R⁴ eine Alkylgruppe mit 1 bis 6 Kohlenstoffatomen und
Z ein durch Abstraktion eines Wasserstoffatoms aus einer Einheit H oder I entstandener Rest ist.

4. Flüssigtoner nach Anspruch 3, dadurch gekennzeichnet, daß in dem Steuermittel die Mengenanteile der Einheiten
| | | | |
|---|---|---|---|
| H | 60 bis 98 | Gew.-%, | |
| I | 0 bis 30 | " | und |
| K | 1 bis 20 | " | |
betragen, wobei die Anteile der Einheiten H, I und K zusammen jeweils 100 Gew.-% ergeben.

5. Flüssigtoner nach Anspruch 3, dadurch gekennzeichnet, daß das Verhältnis von m : n 1 : 20 bis 20 : 1 beträgt.

6. Verwendung eines Flüssigtoners gemäß Anspruch 4 zur elektrophotographischen Herstellung von Flachdruckplatten.

7. Verwendung eines Flüssigtoners gemäß Anspruch 4 zur Herstellung von Ätz- oder Galvanoresists.

## Claims

1. Graft copolymer from structural units A, B, C and D 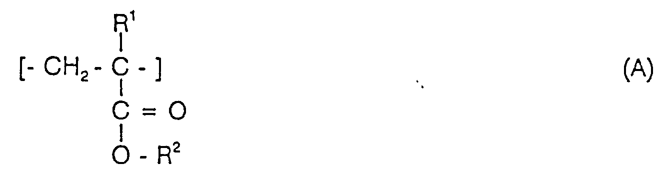 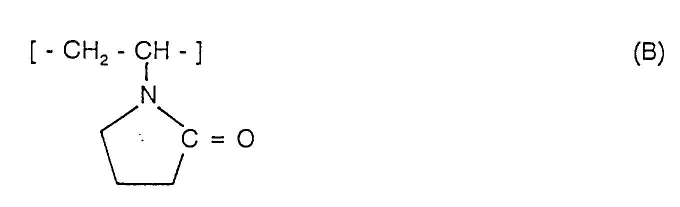 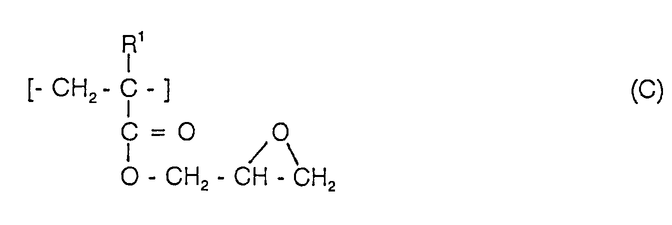 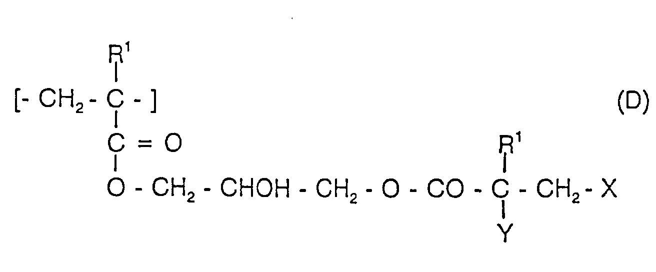 wherein
X and Y represent initiator residues or grafted polymeric residues from units B and E 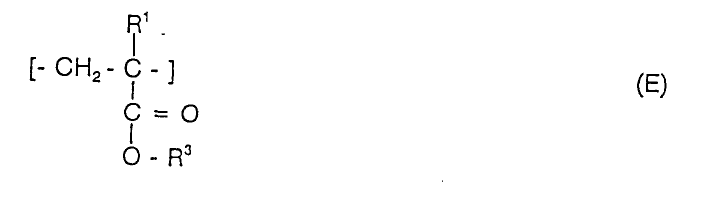 and not more than one of the residues X and Y is an initiator residue, with
R¹ being a hydrogen atom or a methyl group
R² being an alkyl group with 6 to 18 carbon atoms
R³ being an alkyl group with 1 to 3 carbon atoms
and R¹ being a hydrogen atom in at least part of the units E.

2. Graft copolymer according to claim 1, characterized in that the quantities of said units are proportioned as follows:
| | |
|---|---|
| A | 50 - 100 parts by weight |
| B (in the backbone) | 0,5 - 3 parts by weight |
| C | 0,5 - 4 parts by weight |
| D | 250 - 1000 parts by weight. |

3. Colourless and transparent, negatively chargeable liquid toner, comprising a stable dispersion of a high-polymer binder and a high-polymer control agent in an aliphatic hydrocarbon, characterized in that the binder is a graft copolymer according to one of the claims 1 and 2 and the control agent is a polymer with units H, I and K, wherein
H represents the formula 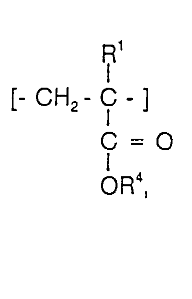
I represents the formula 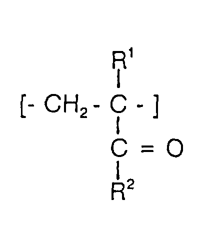
and
K represents the formula 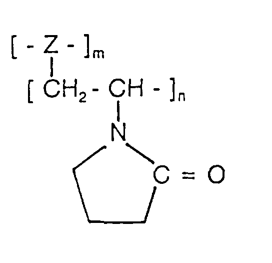
wherein
R¹ and R² have the same meaning as in claim 1,
both of R¹ can be the same or different,
R⁴ represents an alkyl group with 1 to 6 carbon atoms
and
Z represents a residue originated by the abstraction of a hydrogen atom from a unit H or I.

4. Liquid toner according to claim 3, characterized in that the quantities of the units in the control agent are proportioned as follows:
| | |
|---|---|
| H | 60 - 98 % by weight |
| I | 0-30 % by weight and |
| K | 1 to 20 % by weight |
wherein the moieties of the units H, I and K together each time amount to 100 % by weight.

5. Liquid toner according to claim 3, characterized in that the ratio m:n is 1:20 to 20:1.

6. Use of a liquid toner according to claim 4 for the electrophotographic production of planographic printing plates.

7. Use of a liquid toner according to claim 4 for the production of etch or galvano resists.

## Revendications

1. Copolymères greffés d'unités structurales A, B, C et D 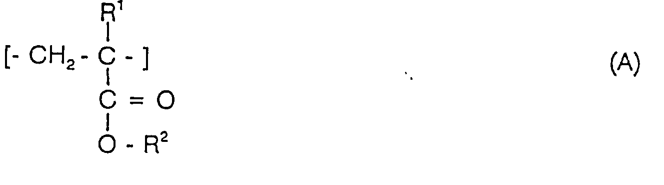 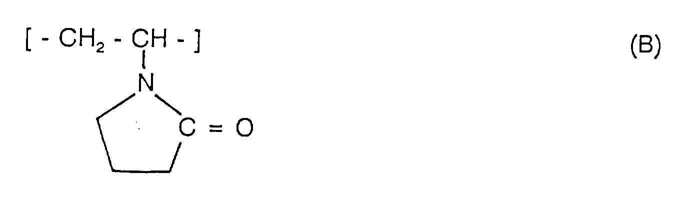 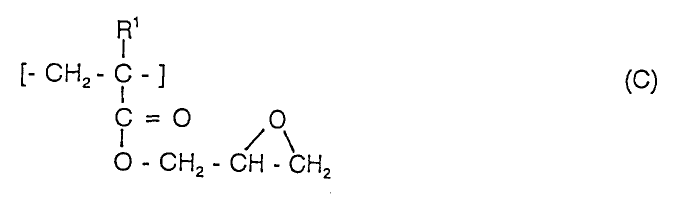 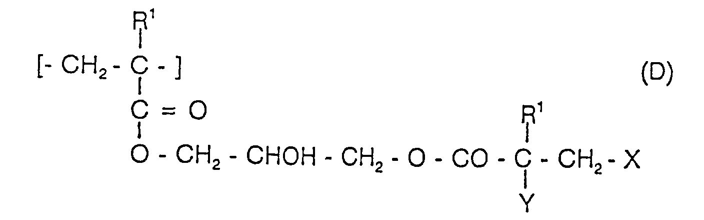 dans lesquelles
X et Y représentent des résidus d'agent d'amorçage ou des résidus polymères greffés d'unités B et E 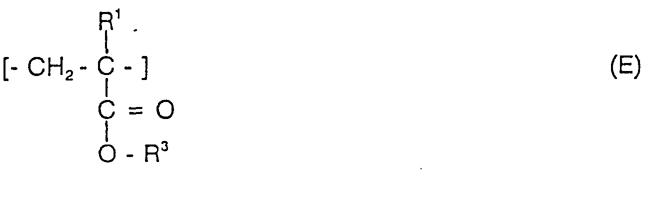 et au maximum un des résidus X et Y est un résidu d'agent d'amorçage, avec
R¹ étant un atome d'hydrogène ou un groupe méthyle
R² étant un groupe alkyle avec 6 à 18 atomes de carbone
R³ étant un groupe alkyle avec 1 à 3 atomes de carbone
et R¹ étant un atome d'hydrogène dans au moins une partie des unités E.

2. Copolymère greffé selon la revendication 1, caractérisé en ce que les quantités desdites unités sont proportionnées comme suit:
| | |
|---|---|
| A | 50 - 100 parties en poids |
| B (dans la chaîne principale) | 0,5 - 3 parties en poids |
| C | 0,5 - 4 parties en poids |
| D | 250 -1000 parties en poids. |

3. Toner liquide incolore, transparent et négativement chargeable, comprenant une dispersion stable constituée par un liant de haut polymère et un agent de contrôle de haut polymère dans un hydrocarbure aliphatique, caractérisé en ce que le liant est un copolymère greffé selon une des revendications 1 et 2 et l'agent de contrôle est un polymère avec les unités H, I et K, dans lequel
H représente la formule 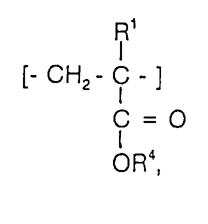
I représente la formule 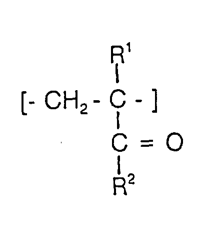
et
K représente la formule 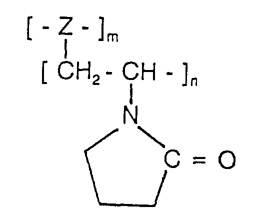
dans lesquelles
R¹ et R² ont la même signification qu'à la revendication 1,
les deux R¹ peuvent être identiques ou différents,
R⁴ représente un groupe alkyle avec 1 à 6 atomes de carbone
et
Z représente un résidu formé par l'extraction d'un atome d'hydrogène d'une unité H or I.

4. Toner liquide selon la revendication 3, caractérisé en ce que les quantités des unités dans l'agent de contrôle sont proportionnées comme suit:
| | |
|---|---|
| H | 60 - 98 % en poids |
| I | 0-30 % en poids, et |
| K | 1 to 20 % en poids, |
l'ensemble des fractions des unités H, I et K donnant toujours 100 % en poids.

5. Toner liquide selon la revendication 3, caractérisé en ce que le rapport m:n est de 1:20 à 20:1.

6. Usage d'un toner liquide selon la revendication 4 pour la production électrophotographique de plaques d'impression planographiques.

7. Usage d'un toner liquide selon la revendication 4 pour la production de résists ou galvanorésists.
